**Europäisches Patentamt**

(19) **European Patent Office**

**Office européen des brevets**

(11) Publication number : **0 493 890 A2**

# (12) EUROPEAN PATENT APPLICATION

(21) Application number : **91311316.3**

(22) Date of filing : **04.12.91**

(51) Int. Cl.⁵ : **B23H 7/26**

(30) Priority : **04.12.90 GB 9026330**

(43) Date of publication of application :
**08.07.92 Bulletin 92/28**

(84) Designated Contracting States :
**AT BE CH DE FR GR IT LI SE**

(71) Applicant : **Lee, Shih-Lu**
**2 Fl. No. 128-1 Wan-An Street**
**Hsing Chung, Taipei (TW)**

(72) Inventor : **Lee, Shih-Lu**
**2 Fl. No. 128-1 Wan-An Street**
**Hsing Chung, Taipei (TW)**

(74) Representative : **Arthur, Bryan Edward et al**
**Withers & Rogers 4 Dyer's Buildings Holborn**
**London EC1N 2JT (GB)**

(54) **A multi-head type of electro-discharging machine.**

(57)   it is a multi-head type of electro-discharging machine, in which each head member has an independent transmission assembly ; the head member can move in X-axis, Y-axis and Z-axis directions by means of a guide screw rod ; every head member can be adjusted independently for operation without intervening the others ; very head member may be mounted with an electrode connector, and two head members can be operated simultaneously in a cross manner ; a plurality of head members are mounted along the rear side of a supporting frame of the machine, and one or more than one head members may be mounted on both ends of the supporting frame for further multi-processing operation.

EP 0 493 890 A2

This invention velates to electro-discharging machine, particularly, a multi-head type machine.

Generally, a conventional electro-discharging machine is considered a very slow processing machine; especially, when a working piece has to be processed in several portions, it would take a considerable long time to complete the work; occasionally, the delivery time of a product would be delayed to cause trouble and inconvenience. The current electro-discharging machine can only process one portion of a working piece at a time; after that portion is completed, the next portion of the working piece will be processed; as a result, a lot of time and manpower would be wasted and costed.

Further, the major structure of a conventional electro-discharging machine comprises a movable x-axis and a Y-axis working racks and a fixed Z-axis discharging head member; in other words, the machine has only one head member, and therefore the machine is deemed not complying with the economical principle. Since the working rack can be moved by means of a manual X-axis guide screw red and a Y-axis guide screw rod, the operation person would have difficulty to operate the guide screw rods in the event of a heavy working piece being processed, aside from the guide screw rods and the working rack possibly being deformed; in that case, the precision of the working rack will be jeopardized.

The current two-head type of discharging machine is still not deemed a perfect machine because of the drawbacks of the embodiments in the existing patents, which are described as follows:

(1) A discharging machine in U.S. patent 4,739,145 disclosed be Check et al (145) has a head member to be driven for adjustment with a cylinder along a slide rail. Since the movement range of a mount driven by the cylinder is limited, each of the head member can only move over one half of the working rack. If the processing portion of a working piece is located within one side of the working rack, the head member which is away from the potion will be unable to move into the area, i.e., the processing space is limited.

(2) In a Japanese patent JAU 46-16320, the two-head type of electro-discharging machine has a fixed Y-axis to be slid along a sliding rail, being mounted over a processing channel. In case of a large working piece to be processed thereon, it would be rather difficult to place the working piece on the machine; since the movement range of the head members is limited, the process efficiency would be limited in case of a process spot beyond the area that the head member can reach.

(3) in a U.S. patent 4,670,635 disclosed by Johnson et al, the head member of the machine can be replaced by means of a support arm and a turret. The head member com only turned at a given angle for Z-axis movement; for movement in other directions, the working rack is the only part that can be moved.

This invention relates to a multi-head type of electro-discharging machine, and particularly to a machine, of which each head member can be operated independently without being interfered by other head member. The machine mainly comprises a plurality of independent head members, which can be operated simultaneously by means of a plurality of X-axis, Y-axis and Z-axis guide screw rods, a fixed working rack so as to bear a heavy working piece without affecting the precision of processing, Each head member can be moved along an X-axis, Y-axis, and Z-axis by means of guide screw rods respectively so as to let all or several head members work simultaneously.

According to of the present invention is to proide an electro-diseharging machine, in which an extension assembly is mounted for adding an electrode connector so as to increase the processing range in which a regular head member unable to reach; further, the two head member with their extension assemblies can also be operated in a cross manner at the same time so as to eliminate a dead-angle in terms of processing space for elevating the processing efficiency.

According to the present invention is to provide an electro-discharging machine, in which there is a plurality of multi-and-separate oil tanks the number of the oil tanks is corresponding to the number of the multi-head type of electro-discherging machines.

An embodiment of this invention is described by way of example, with reference to the drawings in which:

FIG.1 is a perspective view of an embodiment according to the present invention.

FIG.2 is a disassembled view of the present invention.

FIG.3-1 illustrates an embodiment-1 according to the present invention.

FIG.3-2 illustrates an embodiment-2 according to the present invention.

FIG.4 illustrates an extension assembly being adapted to the major part of the present invention.

FIG.5 illustrates an operation view of the extension assembly as shown in FIG.4.

FIG.6 is a perspective view of an embodiment-3 according to the present invention.

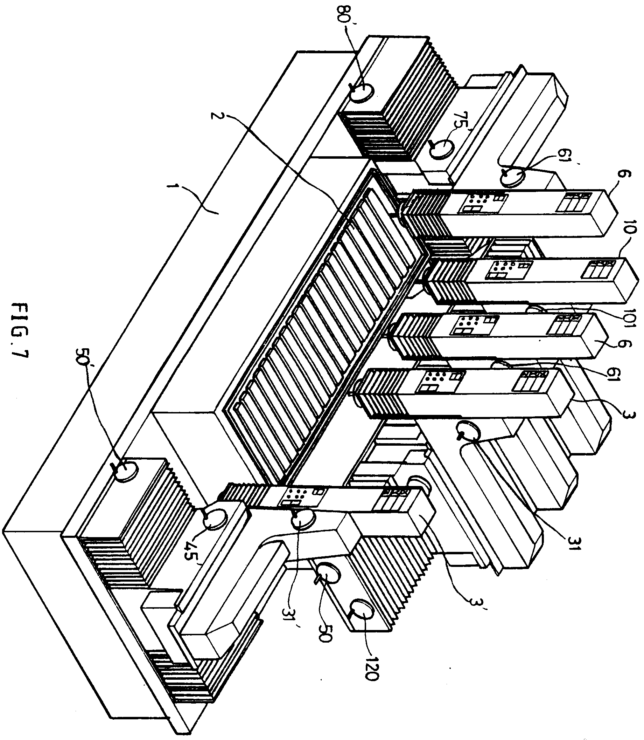

FIG.7 is a perspective view of an embodiment-4 according to the present invention.

FIG.8 illustrates another embodiment of the electrode connector of the present invention.

FIG.9 is a perspective view of a multi-and-separate type of oil tanks according to the present invention.

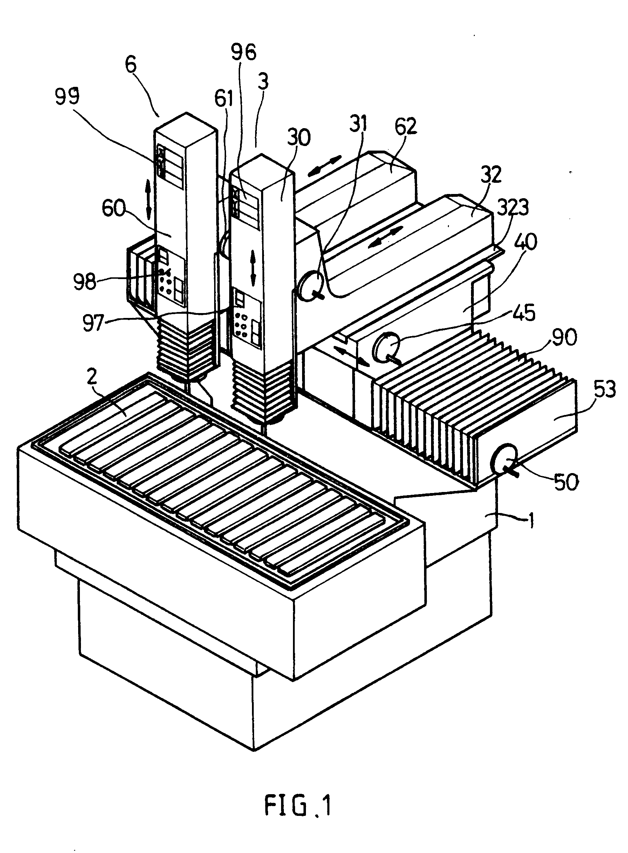

Referring to FIG.1,the present invention mainly comprises a supporting frame 1, a working rack 2, two head members 3 and 6, and some control and transmission parts. The working rack 2 is fixedly attached to the supporting frame 1 for bearing a heavy working piece for operation convenience and precision.

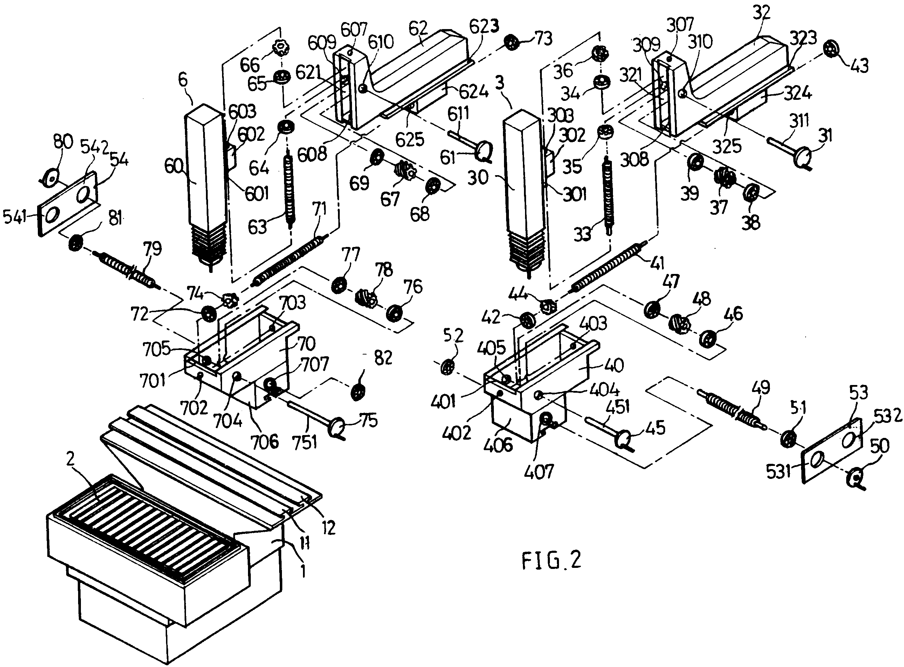

FIG.2 illustrates a disassembled view of an embodiment of the present invention, in which an outer frame 30 of the head member 3 is coupled with a sliding block 32; a control handle 31 (Z-axis control handle) is mounted at one side of the sliding block 32 so as to control the head member 3 to move up and down along the Z-axis. The front side of sliding block 32 has a dove-tail-shaped sliding channel 321 to be mated with a sliding guide member 301 so as to has the outer frame 30 moved up and down freely. The outer frame 30 has a salient block 302 with a screw hole 303 for receiving a guide screw rod 33, of which both ends are mounted with two bearings 34 and 35 respectively so as to facilitate the guide screw rod 33 to be mounted in the holes 307 and 308 respectively. The upper end of the guide screw rod 33 is mounted with a worm wheel 36, which is engaged with a worm 37 on a transmission rod 311 of a control handle 31. The transmission rod 311 is mounted in two holes 309 and 310 by means of two bearings 38 and 39 respectively. The transmission rod 311 of the control handle 31 is coupled with the worm 37, which is further coupled with a worm wheel 36 on the guide screw rod 33. The function of the worm wheel 36 and the worm 37 are used to transmit the rotation force of the control handle 31 to the guide screw rod 33, where by the head member 3 is to move along Z-axis. The bottom of the sliding block 32 is mounted with a guide member 323 and a salient block 324. The guide member 323 is fitted in a sliding channel 401 on the base 40 to move back and forth freely, the base is also mounted with a guide screw rod 41 by means of two bearings 42 and 43 installed in two holes 402 and 403 respectively. The front end of the guide screw rod 41 is mounted with a warm wheel 44; one side of the base 40 is also mounted with a control handle 45 by means of two bearings 46 and 47 to be fitted in two holes 404 and 405 respectively, the transmission rod 451 of the control handle 45 is mounted with a worm 48, which is to be engaged with a worm wheel 44 on the guide screw rod 41 so as to have the rotation force of the control handle 45 coupled to the guide screw rod 41 for perating and adjusting the head member 3 on the base 40 to move along Y-axis.

The bottom of the base 40 is mounted with a salient block 406 with a screw hole 407 for mounting a guide screw rod 49 so as to have the block 406 to slide back and forth by means of a control handle 50 along the sliding rail 11 on the supporting frame 1. The guide screw rod 49 is mounted on the fixed plates 53 and 54 by means of two bearings 51 and 52; the plates 53 and 54 are fixed by welding method on both sides of the supporting frame 1 respectively (as shown in FIG.1) so as to cover the end of the bellows 90.

Beside the head member 3, another head member 6 is installed (since the structure thereof is the same as that of the head member 3, the description thereof is omitted) so as to have the electro-discharging machine furnished with two head members 3 and 6. The base 70 of the head member 6 is mounted on a sliding rail 12 of the supporting frame 1. The head member 6 is also provided with a Z-axis control handle 61, a Y-axis control handle 75, and an X-axis control handle 80 so as to facilitate the head member 6 to operate independently.

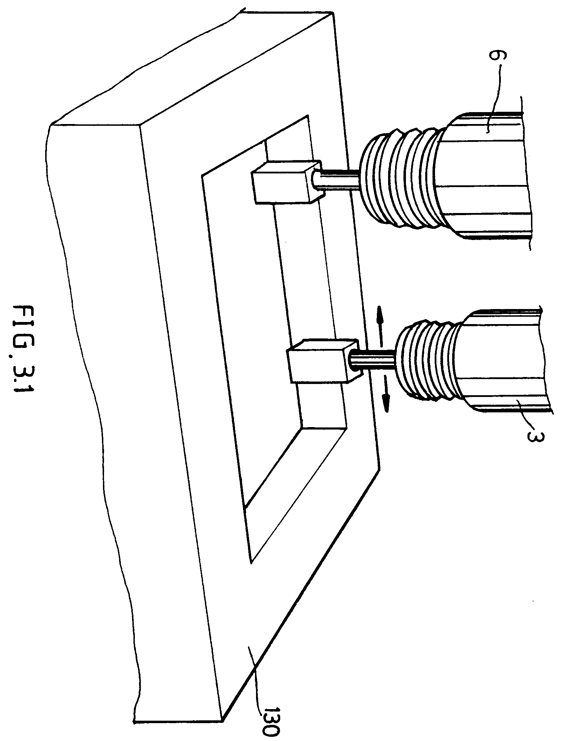

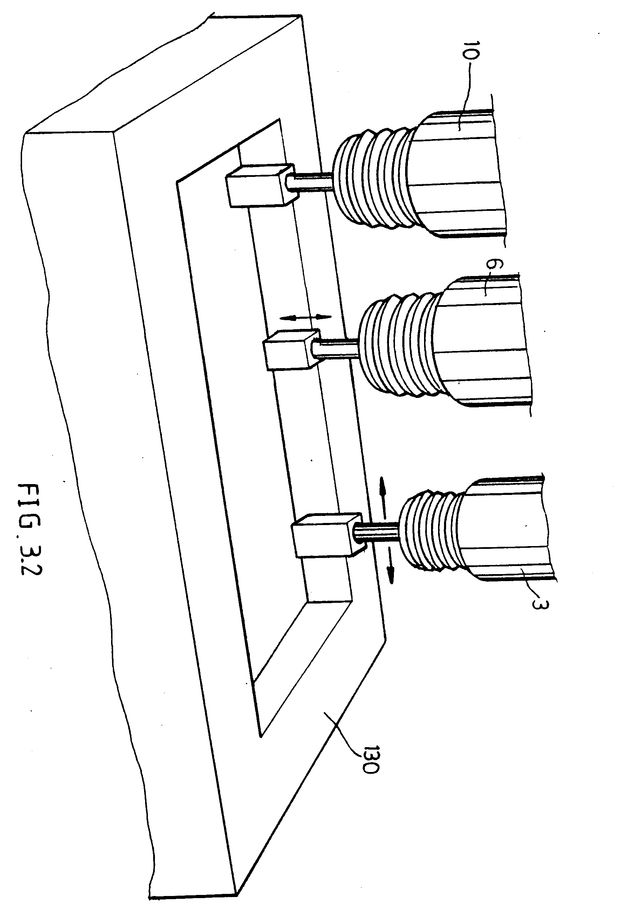

According to the present invention, the two head members 3 and 6 can manually be adjusted and operated by means of the guide screw rods and the control handles thereof so as to reduce the working time about 1/2 or less than that of the conventional electro-discharging machine (in case of a working piece to be processed on several different ports); in other words, the multi-head type of electro-discharging machine can display its working efficiency by reducing the working time on a working piece. FIG.3-1 illustrates an embodiment-1 according to the present invention, in which if the head member 3 has finished its process on a working piece, it can be moved into another working area to work on another working piece, while the head member 6 is still working on its original position with one working piece, i.e., the two head members can be set to two different working pieces separately without being intervened each other.

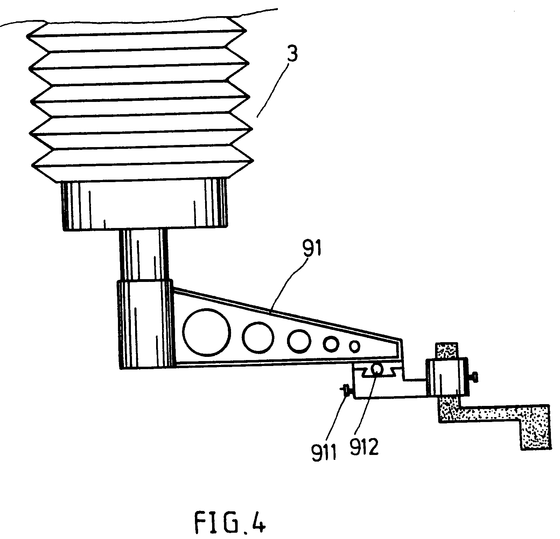

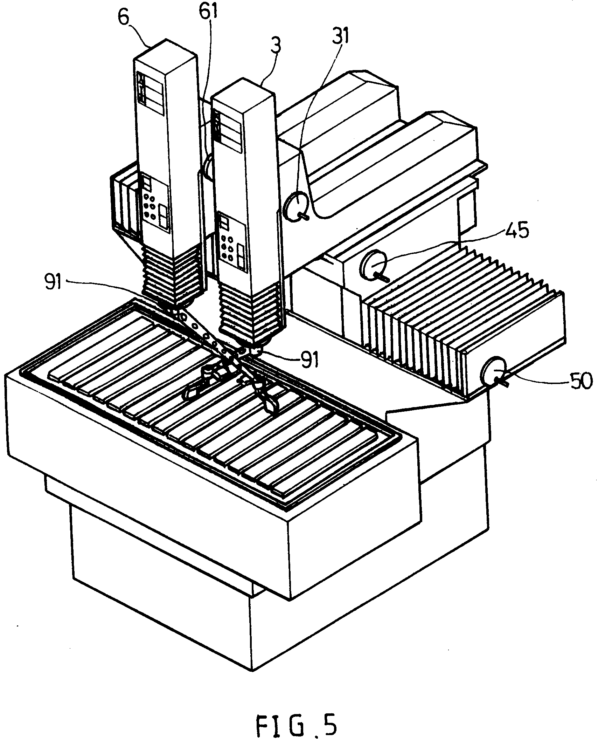

FIG.4 illustrates an extension assembly being connected with the major ports of the present invention, in which the head member 3 or 6 is mounted with an electrode connector 91 so as to let the head member reach a working piece beyond the normal range; for example, the two head members 3 and 6 may be operated in an overlapped manner as shown in FIG.5. The front end of the electrode connector 91 may be mounted with an X-axis and a Y-axis adjusting members 911 and 912 so as to provide more precision operation if necessary.

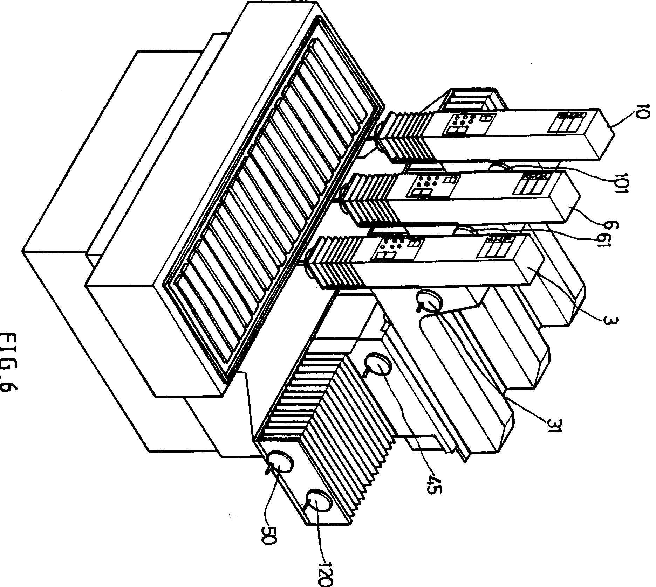

FIG.6 illustrates another embodiment according to the present invention, in which three head members (four or five head members, if necessary) are installed, i.e., a head member 10 is added to the machine as shown in FIG.1; the three head members are installed in parallel for simultaneous operation or independent operation. FIG.3-2 illustrates an embodiment of the present invention having three head members 3, 6 and 10, of which each can be operated independently.

According to the present invention, the head member is driven with a guide screw rod, and the operation thereof can be made manually through a control handle. The machine may also be operated electrically and automatically with a circuit control box 97 as shown in FIG.1.

Fig,7 illustrates still another embodiment of the present invention, in which three head members are installed on the rear side of the supporting frame 1, and two head members 3′ and 6′ are installed on both ends of the supporting frame 1 respectively (or each end may be installed with two , or three, or more than three head members, if necessary). The X-axis transmission assemblies of the head members 3′ and 6′ are installed at a level that is slightly lower than top surface of the working rack 2 in order that the two head members 3′ and 6′ might be moved to the rear side of the supporting frame 1, when not in use, beside the three head members without affecting the normal operation of the three head members. Since the X-axis transmission assemblies of the head members 3′ and 6′ are lower on a level than the working rack 2, the two head members would not bother any large working piece placed on the working rack; therefore, the present invention is deemed a device which can provide a processing work in a multiple manner so as to save time, manpower, space and costs in terms of economical principle.

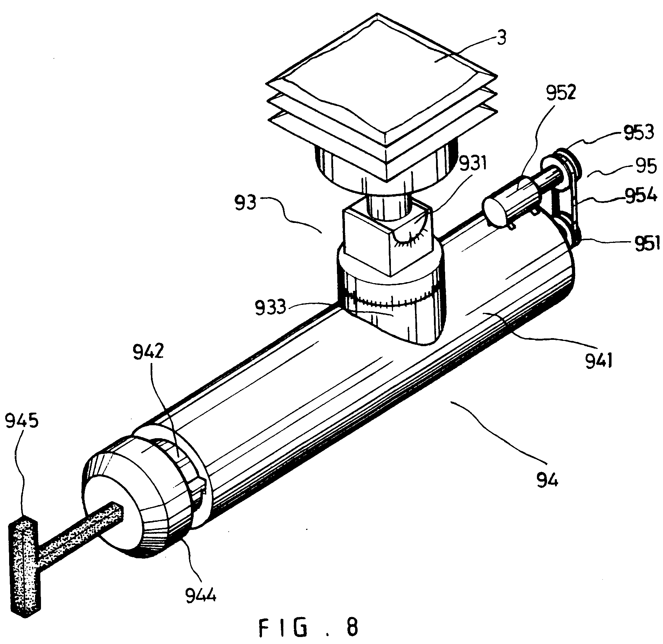

FIG.8 illustrates another embodiment according to the present invention, which comprises a turret 93, an extension arm assembly 94, and a driving belt assembly 95. The turret 93 includes a vernier scale 931, and a turret base 933. a vernier is also provided between base 933 so as to let the extension arm assembly 94 turn at a given angle. A slidable rod 942 inside the extension arm 941 is coupled with a guide screw (not shown); the guide screw is to be driven by a driving belt assembly 95, which includes a motor 952, two pulleys 951 and 953, and a belt 954; then, the slidable rod 942 and an electrode fastener 944 mounted with an electrode can be moved at a give angle and length during processing operation.

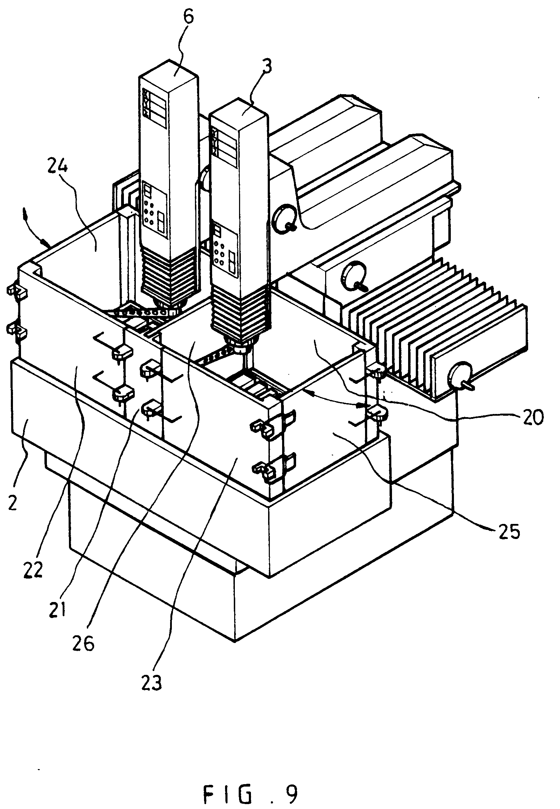

FIG.9 illustrates a perspective view of the multi-and-separate type of oil tanks according to the present invention, which is designed for fitting the operation of the multi-head type of electro-discharging machine. Between two oil tanks, a gate plate 26 is detachably installed; whenever the gate plate 26 is pulled out, the two oil tanks will become a larger oil tank antomatically. The external ends of every two oil tanks have openable doors 22, 23, 24 and 25 so as to facilitate the adjustment of head members, and the replocement of electrodes thereof. Each of the oil tanks can be operated, filled with oil, or can drain off oil separately.

## Claims

1. A multi-head type of Electro-discharging machine mainly comprising a supporting frame, a working rack mounted on said supporting frame, a plurality of head members with transmission assemblies thereof, and several sets of electrode connectors a plurality of multi-and-separate oil tanks; and said transmission assemblies including a plurality of guide screw rods and control handles, whereby a sliding block able to sliding back and forth along a sliding channel so as to adjust a Y-axis to a suitable position; and an outer frame being mounted in a sliding channel of a sliding block so as to adjust a Z-axis to a suitable position; and a base being mounted on a sliding rail of said supporting frame to slide back and forth so as to adjust an X-axis to a suitable position; and said machine characterized that each of said transmission assemblies in each of said head members can be operated independently without intervening each other so as to achieve a multi-processing function with one single machine.

2. A multi-head type of electro-discharging machine as claimed in claim 1, wherein said electrode connector on said head member is mounted with an extension assembly so as to make said head member able to reach a farther scope, and to make two said head members able to process in a cross manner in order to reduce the processing time on a working piece; and each of said electrode connector being mounted with a set of minor adjusting members for X-axis and Y-axis.

3. A multi-head type of electro-discharging machine as claimed in claim 1, wherein one ar marathon one of said head members are installed in the rear side and the left and right sides of said supporting frame if necessary; and the X-axis transmission assembly on said head member installed beside said supporting frame being lower on level than that of said working rack so as to move said head members on both ends of said supporting frame to a suitable position beside the head members in the rear side in order not to intervene the normal operation of other head members.

4. A multi-head type of electro-discharging machine as claimed in claim 1, wherein several sets of electrode conectors are mounted on said head members with an extension means which includes a turret, an extension arm assembly, and a driving belt assembly; and said turret being mounted between said head member and said extension arm assembly for adjustnig the rotation angle thereof; and said electrodes each able to extend horizontally by controlling a slidable rof in an extension arm via a guide screw and a motor in said driving belt assembly so as to facilitate discharging process at different angle.

5. A multi-head type of electro-discharging machine as claimed in claim 1, wherein said multi-and-separate oil tanks are corresponding in number to that of the multi-heads of said electro- discharging machine; and said oil tanks being partitioned with a gote plate; and each said oil tank having openable doors so as to failitate each said oil tank to operate, to adjust, to fill and drain oil separately and independently.

FIG.1

FIG.2

FIG.3.1

FIG. 3.2

FIG.4

FIG.5

FIG.6

FIG.7

FIG. 8

FIG . 9